# EUROPÄISCHE PATENTANMELDUNG

(11) **EP 3 838 776 A1**
(43) Veröffentlichungstag der Anmeldung: **23.06.2021**
(21) Anmeldenummer: 20194765.2
(22) Anmeldetag: 07.09.2020
(51) Int. Cl.: B65B 11/32, B65B 25/00, B65B 51/22, B29C 65/32, B65B 65/00

(54) **INDUKTOR FÜR MEHRBAHNIGE VERPACKUNGSMASCHINEN**

(30) Priorität: 20.12.2019 DE 102019220426
(71) Anmelder: Theegarten-Pactec GmbH & Co. KG, 01237 Dresden (DE)
(72) Erfinder: Dietrich, Mike, 01187 Dresden (DE); Ehlert, Sebastian, 01237 Dresden (DE); Oehlert, Volker, 01809 Dohna/Röhrsdorf (DE)
(74) Vertreter: Grünecker Patent- und Rechtsanwälte PartG mbB

(57) **Zusammenfassung**

Die vorliegende Erfindung betrifft eine Siegeleinrichtung für eine Verpackungsmaschine zur Verpackung kleinstückiger Artikel auf parallelen Artikelbahnen. Um die Artikel während des Transports auf parallelen Artikelbahnen gleichzeitig im kontinuierlichen Arbeitsbetrieb mit höherer Arbeitsgeschwindigkeit und höherer Zuverlässigkeit siegeln zu können, umfasst die erfindungsgemäße Siegeleinrichtung (1) wenigstens einen Induktor (2) und für jede Artikelbahn (B1, B2) wenigstens eine Siegeleinheit (3), die durch den Induktor (2) induktiv beheizbar ist, um einen Packstoff, der einem der auf der Artikelbahn (B1, B2) geförderten Artikel zugeordnet ist, zu siegeln, wobei der Induktor (2) für jede Artikelbahn (B1, B2) mindestens eine eigene Leiterschleife (21, 22) aufweist.

## Beschreibung

Die vorliegende Erfindung betrifft eine Siegeleinrichtung für eine Verpackungsmaschine zur Verpackung kleinstückiger Artikel auf parallelen Artikelbahnen.

Eine derartige Verpackungsmaschine ist aus der EP 2 906 473 A1 bekannt. Die Siegelung der Produkte erfolgt im kontinuierlichen Verpackungsprozess auf einer Siegelstation mit beweglicher und feststehender Siegelbacke.

Des Weiteren sind von den Herstellern Corazza und Sapal konventionelle Linear-Siegelsysteme bekannt, die durch Heizpatronen mit Energie versorgt werden.

Die WO 06/108781 A1 offenbart eine Verpackungsmaschine für Lollipops, wobei die rotierenden Greifer zum Versiegeln der Folie um die Stiele der Lollis mittels Induktion beheizt werden. Diese Maschine arbeitet jedoch nur einseitig zum Produkt und einbahnig, hat also nicht die Problemstellung der gleichzeitigen Erwärmung von Arbeitsorganen auf mehreren Bahnen zu lösen.

Generell ist das Beheizen von Arbeitsorganen in anderen Bereichen der Verpackungsindustrie bekannt (z.B. zum Siegeln von Tuben oder beim Siegeln des Verschlusses auf Getränkekartons). Auch aus diesen Bereichen sind keine mehrbahnigen Lösungen mit vergleichbaren Anforderungen bekannt.

Der Erfindung liegt die Aufgabe zugrunde, eine Siegeleinrichtung der eingangs genannten Art dahingehend zu verbessern, um die Artikel während des Transports auf parallelen Artikelbahnen gleichzeitig im kontinuierlichen Arbeitsbetrieb mit höherer Arbeitsgeschwindigkeit und höherer Zuverlässigkeit siegeln zu können.

Zur Lösung dieser Aufgabe stellt die Erfindung die Siegeleinrichtung nach Anspruch 1 bereit.

Die hierin offenbarte Siegeleinrichtung ist konfiguriert für eine Verpackungsmaschine zur Verpackung kleinstückiger Artikel auf parallelen Artikelbahnen und umfasst wenigstens einen Induktor und für jede Artikelbahn wenigstens eine Siegeleinheit, die durch den Induktor induktiv beheizbar ist, um einen Packstoff, der einem der auf der Artikelbahn geförderten Artikel zugeordnet ist, zu siegeln, wobei der Induktor für jede Artikelbahn mindestens eine eigene Leiterschleife aufweist.

Es liegt auch im Rahmen der Erfindung, dass jede Artikelbahn mindestens einen eigenen Induktor (mit mindestens einer eigenen Leiterschleife) aufweist. Wenn die verschiedenen Artikelbahnen zugeordneten Induktoren jeweils durch einen eigenen Generator angesteuert werden, können die Induktoren unabhängig voneinander geregelt werden.

Die Bezeichnung kleinstückige Artikel umfasst insbesondere kleinstückige Lebensmittel wie Schokoladenstücke, Bonbons, Kaugummis, Kaubonbons, Zückerstücke oder Brühwürfel, oder kleinstückige Arzneimittel, wie Tabletten.

Die erfindungsgemäße Siegeleinrichtung ist insbesondere konzipiert für eine mehrbahnige (speziell 2-bahnige) Brühwürfelverpackungsmaschine, um einen Packstoff zur Verpackung der Brühwürfel im kontinuierlichen Verpackungsprozess zu siegeln.

Das Induktionsheizsystem, bestehend aus Induktor und Siegeleinheit, erwärmt die Siegeleinheit berührungslos, sodass die Artikel während des Transportes gesiegelt werden können. Zudem erreicht das Induktionsheizsystem einen hohen Wirkungsgrad, um unnötige Energieverluste beim Beheizen der Siegeleinheiten zu minimieren.

Die grundlegenden Prozesse der Induktionserwärmung lassen sich physikalisch wie folgt beschreiben:
Der Induktor, i.d.R. ein elektrischer Kupferleiter, wird durch einen Generator mit einem hochfrequenten Wechselstrom beaufschlagt. Dieser Wechselstrom erzeugt ein zeitlich veränderliches Magnetfeld, das sich jeweils näherungsweise ringförmig um die einzelnen Leiter ausbildet und mit steigendem Abstand zum Leiter stark (B ist proportional 1/r) abnimmt. Die Intensität (Amplitude) des magnetischen Feldes ist dabei im Wesentlichen von der Stromstärke abhängig, die den elektrischen Leiter durchfließt.

Die Erwärmung in der Siegeleinheit resultiert dann aus Wirbelströmen, die durch das zeitlich veränderliche Magnetfeld (Frequenzabhängigkeit) in der Oberfläche der Siegeleinheit induziert und aufgrund des elektrischen Widerstandes des Materials der Siegeleinheit in Wärme umgewandelt werden. Anschließend wird diese Verlustwärme dann durch Wärmeleitung ausgehend von der Oberfläche auf die gesamte Siegeleinheit verteilt.

Die Erfindung entstand aus der Weiterentwicklung eines hausintern bekannten Siegelkopf-Induktors. Dieser umfasste einen mittig zwischen den Bahnen liegenden Hin- bzw. Rückleiter und zwei parallel verschaltete, mittig auf den einzelnen Bahnen liegende Leiter zur Erwärmung von als Greiferbackenpaaren ausgebildeten Siegeleinheiten während der Bewegung entlang zweier paralleler kreisförmiger Bewegungsbahnen um eine Krümmungsachse des Induktors bzw. um die Drehachse des Siegelkopfs.

Dabei entstand das Problem, dass die beiden inneren Greifer deutlich wärmer wurden als die äußeren. Des Weiteren wurde der Wirkungsgrad als unzureichend eingestuft und es kam zu unzulässigen Temperaturschwankungen der hintereinander in einer Reihe liegenden Greiferbackenpaare auf Grund von Einstelltoleranzen.

Die stärkere Erwärmung der inneren Greifer war auf den Einfluss des mittleren elektrischen Leiters des Induktors zurückzuführen, da dieser viel näher an den inneren als an den äußeren Backen lag.

Dieser hausintern bekannte Induktor wurde dadurch weiterentwickelt, dass er für jede Artikelbahn eine eigene Leiterschleife aufweist.

Durch die für jede Artikelbahn eigene Leiterschleife können die Siegeleinheiten auf mehreren Artikelbahnen gleichzeitig und symmetrisch erwärmt werden. Zudem können Temperaturabweichungen bedingt durch Lagefehler der Siegeleinheiten, z.B. als Folge von Fehleinstellung oder Verschleiß, auch im Dauerbetrieb innerhalb eines engen Toleranzbereichs von +/- 5K gehalten werden. Durch entsprechende Verschaltung der Leiterschleifen können die Siegeleinheiten auf den jeweiligen Artikelbahnen jeweils den erforderlichen Energieeintrag (die erforderliche Temperierung) erhalten.

Vorteilhafte Weiterbildungen der Erfindung sind Gegenstände der abhängigen Ansprüche.

Es kann von Vorteil sein, wenn die Leiterschleifen parallel oder in Serie verschaltet sind. Durch unterschiedliche Verschaltungen der Leiterschleifen lassen sich durch Variation von Stromstärke und -Spannung unterschiedliche Effekte in der Erwärmung der Siegeleinheiten erzielen. Vorzugsweise ist jede Leiterschleife in sich geschlossen. Ein Leiter der Leiterschleifen kann einen Rechteckquerschnitt aufweisen. Idealerweise weist die Seite des Rechteckquerschnitts mit größerer Ausdehnung zur Siegeleinheit. Dadurch kann die Siegeleinheit auf ihrer Bewegungsbahn in engem Abstand am Leiter der Leiterschleife entlanggeführt werden, sodass eine in der Fläche gleichmäßige Erwärmung erzielt werden kann.

Es kann nützlich sein, wenn jede Siegeleinheit zur induktiven Beheizung entlang einer Bewegungsbahn bewegbar ist und jede Leiterschleife wenigstens zwei Längsleiterabschnitte aufweist, die sich parallel zu der Bewegungsbahn der Siegeleinheit erstrecken, vorzugsweise auf unterschiedlichen Seiten davon, und bevorzugt in entgegengesetzten Richtungen stromdurchflossen sind, und wenigstens einen Querleiterabschnitt, der sich quer bzw. senkrecht zur Bewegungsbahn der Siegeleinheit erstreckt, um die zwei Längsleiterabschnitte zu verbinden. Mit dieser Ausführung kann die Siegeleinheit während einer Bewegung entlang ihrer Bewegungsbahn besonders gleichmäßig erwärmt werden. Die Bewegungsbahn der Siegeleinheit ist vorzugsweise in sich geschlossen und verläuft z.B. kreis- oder schleifenförmig. Bevorzugt fällt die die Bewegungsbahn der Siegeleinheit teilweise mit der Artikelbahn zusammen, umfasst aber zusätzlich die Induktionsstrecke, die abseits der Artikelbahn verläuft, wobei die Siegeleinheit auf der Induktionsstrecke induktiv beheizt wird. Die Artikel werden demnach nicht durch die Induktionsstrecke geführt.

Es kann sich als praktisch erweisen, wenn jede Leiterschleife symmetrisch zu der Bewegungsbahn der jeweiligen Siegeleinheit ausgerichtet ist und/oder die unterschiedlichen Artikelbahnen zugeordneten Leiterschleifen symmetrisch zueinander angeordnet und ggf. symmetrisch zueinander stromdurchflossen sind. Dadurch ist eine besonders homogene Erwärmung der Siegeleinheit erzielbar.

Es kann sinnvoll sein, wenn die Siegeleinrichtung für jede Artikelbahn eine Vielzahl von Siegeleinheiten aufweist. Dadurch kann die Anzahl der pro Zeit und Artikelbahn bearbeiteten Artikel erheblich erhöht werden. Falls es mehrere Siegeleinrichtungen pro Bahn gibt, können sich eine oder mehrere Siegeleinrichtungen gleichzeitig im Wirkungsbereich des Induktors d.h. im "eingekoppelten Zustand" befinden. Die Anzahl der im Wirkungsbereich des Induktors befindlichen Siegeleinrichtungen ist vorzugsweise immer gleich.

Es kann von Vorteil sein, wenn ein die Leiterschleife bildender Leiter als Rohr ausgebildet ist und vorzugsweise mit Kühlmittel durchströmt wird. Da sich die elektrischen und magnetischen Eigenschaften des Leiters bei Temperaturwechsel ändern bzw. verschlechtern können, kann diesem durch innenseitige Kühlung der Leiterschleifen entgegengewirkt werden, um auch im Dauerbetrieb einen gleichmäßig hohen Wirkungsgrad der Siegeleinrichtung zu erzielen.

Es kann von Nutzen sein, wenn die Siegeleinheit aus ferromagnetischem Edelstahl ausgebildet ist. Diese Ausführungsform erweist sich insbesondere bei einer Brühwürfelverpackungsmaschine von Vorteil, da pulverförmige Brühwürfelrückstände stark salzhaltig sind und bei Ablagerung insbesondere an schwer zugänglichen Maschinenoberflächen Korrosionsschäden verursachen können. Durch die Herstellung der Siegeleinheit aus ferromagnetischem Edelstahl können Korrosionsschäden an der Siegeleinheit verringert werden. Zudem erweist sich ferromagnetischer Edelstahl auch als vorteilhaft, da er aus Sicht der Feldbündelung sehr gute magnetische Eigenschaften aufweist.

Es kann vorteilhaft sein, wenn die Siegeleinrichtung eine Flussleiteinrichtung aufweist, um die von den Leiterschleifen ausgehenden magnetischen Feldlinien auf die Bewegungsbahn der jeweiligen Siegeleinheit zu konzentrieren und/oder symmetrisch zu dieser auszurichten, wobei vorzugsweise die Flussleiteinrichtung wenigstens einen Kanal bildet, der zumindest einen Längsleiterabschnitt einer der Leiterschleifen umgibt und durch welchen die Siegeleinheit auf ihrer Bewegungsbahn geführt wird. Vorzugsweise weist jede Leiterschleife eine eigene Flussleiteinrichtung auf. Bevorzugt besteht jede Flussleiteinrichtung aus einer Vielzahl einzelner Flussleitelemente. Die Flussleiteinrichtung weist vorzugsweise eine sehr schlechte elektrische Leitfähigkeit auf, damit möglichst keine Wirbelströme induziert werden und somit möglichst wenig Verlustwärme in den Flussleitelementen umgesetzt wird. Bevorzugt wird Fluxtrol A für die Flussleiteinrichtung verwendet, d.h. ein Sinterwerkstoff aus Eisenpartikeln und Kunststoff, bei dem der Eisenstaub vom Kunststoff ummantelt ist.

Es kann zweckdienlich sein, wenn jede Siegeleinheit mindestens ein induktiv beheizbares Greiferbackenpaar aufweist, um einen zumindest teilweise mit Packstoff umwickelten Artikel an einer Aufnahmestation (zwischen den Greiferbacken klemmend) aufzunehmen, kontinuierlich entlang der jeweiligen Artikelbahn zu fördern, und nach Siegelung des dem Artikel zugeordneten Packstoffs an einer Abgabestation abzugeben, wobei die induktive Beheizung des Greiferbackenpaars vorzugsweise zwischen der Abgabestation und der Aufnahmestation in einem Zustand erfolgt, in welchem das Greiferbackenpaar keinen Artikel fördert. Insbesondere sind die Greiferbacken in einem Zustand, in welchem kein Artikel klemmend gehalten wird, zur induktiven Wärmeübertragung besser zugänglich und können zur Energieübertragung sehr dicht an die Leiterschleife gebracht werden. Zudem kann sich die auf die Greiferbacken induktiv übertragene Wärme noch vor der Aufnahme des Artikels gleichmäßig über die Greiferbacken verteilen, sodass qualitätsmindernde Wärmespitzen nicht unmittelbar auf den zu verpackenden Artikel einwirken. Die einzelne Siegeleinheit kann auch aus mehr als einem Greiferbackenpaar bestehen, z.B. zwei Greiferpaare, die gleichzeitig ein Produkt greifen oder ein Greiferpaar und ein zusätzlicher Siegelstempel, der das Produkt dann von der dritten Seite noch siegeln kann. Es ist allerdings auch möglich, den Induktor in einen Bereich zu legen, in welchem die Greifer Produkte siegeln. Dazu müsste der Induktor dann außerhalb der Siegeleinheiten und nicht zwischen den Siegelbacken positioniert werden. Der Induktor wäre damit komplizierter und hätte vermutlich einen schlechteren Wirkungsgrad. Im Gegenzug könnte der Induktor aber über einen wesentlich längeren Zeitraum zum Erwärmen der Siegelelemente genutzt werden, da er dann deutlich länger sein könnte.

Es kann sich als nützlich erweisen, wenn die Flussleiteinrichtung für jede Greiferbacke zumindest eines Greiferbackenpaars pro Artikelbahn einen eigenen Kanal bildet. Vorzugsweise stehen sich die zu beheizende Seite jeder Greiferbacke und ein Längsleiterabschnitt im Kanal parallel gegenüber, während die Greiferbacke auf ihrer Bewegungsbahn durch den Kanal geführt wird. So ist eine großflächige und gleichmäßige Erwärmung der zu beheizenden Seite der Greiferbacke erreichbar.

Es kann hilfreich sein, wenn die Siegeleinrichtung als ein um eine Drehachse rotierender Siegelkopf ausgebildet ist. Mit dieser Bauform lassen sich bis zu 3000 (1500 pro Bahn) Artikel pro Minute im kontinuierlichen Verpackungsprozess siegeln.

Es kann sich als praktisch erweisen, wenn jede Leiterschleife, vorzugsweise jeder Längsleiterabschnitt, um die Drehachse gekrümmt ist. Dadurch kann die zu beheizende Siegeleinheit über eine lange Strecke auf ihrer Bewegungsbahn eng an der Leiterschleife bzw. den Längsleiterabschnitten geführt werden.

### Kurze Beschreibung der Figuren

Es zeigen:
Fig. 1 eine schematische perspektivische Ansicht einer Siegeleinrichtung nach dem ersten Ausführungsbeispiel der Erfindung, wobei die Siegeleinrichtung als Siegelkopf ausgebildet ist und parallel verschaltete Leiterschleifen mit jeweils radial zur Drehachse des Siegelkopfs versetzten Längsleiterabschnitten aufweist.
Fig. 2 eine schematische Schnittansicht durch ein Greiferpaar der Siegeleinrichtung gemäß Fig. 1 im Bereich der Leiterschleifen.
Fig. 3 eine vereinfachte schematische Schnittansicht basierend auf Fig. 2 zur Erläuterung der Magnetfeldintensität (hell = starkes Magnetfeld, dunkel = schwaches Magnetfeld) während der Wärmeübertragung durch Induktion.
Fig. 4 eine schematische perspektivische Ansicht einer Siegeleinrichtung nach dem zweiten Ausführungsbeispiel der Erfindung, wobei die Siegeleinrichtung als Siegelkopf ausgebildet ist und parallel verschaltete Leiterschleifen mit jeweils parallel zur Drehachse des Siegelkopfs versetzten Längsleiterabschnitten aufweist.
Fig. 5 eine schematische Schnittansicht der Siegeleinrichtung gemäß Fig. 4.
Fig. 6 eine schematische perspektivische Ansicht einer Siegeleinrichtung nach dem dritten Ausführungsbeispiel der Erfindung, wobei die Siegeleinrichtung als Siegelkopf ausgebildet ist und seriell verschaltete Leiterschleifen mit jeweils parallel zur Drehachse des Siegelkopfs versetzten Längsleiterabschnitten aufweist.
Fig. 7 eine schematische Schnittansicht der Siegeleinrichtung gemäß Fig. 6.

### Detaillierte Beschreibung der bevorzugten Ausführungsbeispiele

Die erfindungsgemäße Siegeleinrichtung 1, die speziell für eine Verpackungsmaschine zur Verpackung kleinstückiger Artikel wie Brühwürfel auf parallelen Artikelbahnen B1, B2 konfiguriert ist, umfasst einen Induktor 2 und für jede Artikelbahn B1, B2 wenigstens eine Siegeleinheit 3, die durch den Induktor 2 induktiv beheizbar ist, um einen Packstoff, der einem der auf der Artikelbahn B1, B2 geförderten Artikel A zugeordnet ist, zu siegeln. Erfindungsgemäß weist der Induktor 2 für jede Artikelbahn B1, B2 eine eigene Leiterschleife 21, 22 auf.

Der Aufbau einer mehrbahnigen Verpackungsmaschine ist beispielsweise aus der EP 2 906 473 A1 bekannt. Die Inhalte der EP 2 906 473 A1 und der bislang unveröffentlichten Patentanmeldung DE 10 2019 210 354.5 sind hierin durch Bezugnahme aufgenommen.

Zunächst werden einige generische Merkmale der Siegeleinrichtung 1 erläutert, bevor anhand der Figuren auf die individuellen Merkmale der Ausführungsbeispiele eingegangen wird.

In den nachstehenden Ausführungsbeispielen ist die Siegeleinrichtung 1 als ein um eine Drehachse D rotierender Siegelkopf für eine zweibahnige Verpackungsmaschine ausgebildet. Die Siegeleinrichtung 1 weist für jede der beiden Artikelbahnen B1, B2 eine Vielzahl von Siegeleinheiten 3 auf, die regelmäßig um den Umfang des Siegelkopfes angeordnet sind. Der Induktor 2 erstreckt sich abschnittsweise umfangsseitig entlang der kreisförmigen Bewegungsbahnen B1, B2 der Siegeleinheiten 3 über eine Bogenlänge von ca. 90°. Jede der beiden Leiterschleifen 21, 22 ist um die Drehachse D gekrümmt. Ein die Leiterschleife 21, 22 bildender Leiter ist als Rohr ausgebildet und wird mit Kühlmittel durchströmt.

Über eine Gabel 23 und eine Anschlussplatte 24 sind die Leiterschleifen 21, 22 an einen Generator (nicht dargestellt) angeschlossen, der den Induktor 2 mit einem hochfrequenten Wechselstrom bei einer Frequenz von 150 und 300 kHz beaufschlagt. Aufgrund der hohen Frequenz gibt es im Induktor 2 und in der Siegeleinheit 3 sogenannte Stromverdrängungseffekte. Das heißt, dass der Strom in den Bauteilen größtenteils auf der Oberfläche fließt. Die Erwärmung durch Wirbelströme findet daher nur in der Oberfläche der Siegeleinheit 3 statt (Skin-effekt).

Die Ausführung des Induktors 2 als Rohr ermöglicht, den Induktor 2 im Inneren mit Kühlwasser zu durchspülen. Da es auch innerhalb des Induktors zur Wirbelstrombildung kommt, dieser sich aber nicht wesentlich erwärmen darf, um konstantes elektrisches und magnetisches Verhalten aufzuweisen, ist eine Kühlung des Induktors 2 sinnvoll. Dies sichert die gleichmäßige Temperierung des Induktors 2 während des Betriebes.

Um für jede Artikelbahn B1, B2 eine eigene Leiterschleife 21, 22 zu bilden, weist jede Leiterschleife 21, 22 zwei Längsleiterabschnitte 21l, 22l auf, die sich auf unterschiedlichen Seiten der Bewegungsbahn B1, B2 der Siegeleinheit 3 sowie parallel dazu erstrecken, sowie jeweils einen Querleiterabschnitt 21q, 22q, der sich quer bzw. senkrecht zur Bewegungsbahn B1, B2 der Siegeleinheit 3 erstreckt, um die zwei Längsleiterabschnitte 211, 221 zu verbinden. Je nach Verschaltung sind die beiden Längsleiterabschnitte 21l, 22l jeder Leiterschleife 21, 22 in entgegengesetzten Richtungen stromdurchflossen. Jeder Längsleiterabschnitt 21l, 22l weist einen Rechteckquerschnitt auf, dessen Seite mit größerer Ausdehnung zur Bewegungsbahn B1, B2 der Siegeleinheit 3 weist.

Jede Siegeleinheit 3 umfasst ein induktiv beheizbares Greiferbackenpaar 31, 32, um einen z.B. schlauchförmig mit Packstoff umwickelten Artikel A an einer Aufnahmestation zwischen den Greiferbacken klemmend aufzunehmen, kontinuierlich entlang der jeweiligen Artikelbahn B1, B2 zu fördern, und nach Siegelung des dem Artikel A zugeordneten Packstoffs an einer Abgabestation abzugeben. Die induktive Beheizung des Greiferbackenpaars 31, 32 erfolgt dabei auf der Bewegungsbahn B1, B2 der Siegeleinheit 3 zwischen der Abgabestation und der Aufnahmestation, d.h. in einem Zustand, in welchem das Greiferbackenpaar 31, 32 keinen Artikel fördert.

Die Artikelbahn B1, B2 und die Bewegungsbahn B1, B2 der jeweiligen Siegeleinheit 3 sind von der Aufnahmestation bis zur Abgabestation der Artikel überlappend, und von der Abgabestation bis zur Aufnahmestation voneinander getrennt. Die Induktionsstrecke, auf welche die Siegeleinheit 3 induktiv beheizt wird, erstreckt sich vorzugsweise abseits der Artikelbahn entlang der Bewegungsbahn B1, B2 der jeweiligen Siegeleinheit 3 zwischen der Abgabestation und der Aufnahmestation.

Die induktiv übertragene Wärme wird demnach zunächst in dem Greiferbackenpaar 31, 32 gespeichert und erst nach Aufnahme eines Artikels an der Aufnahmestation an den dem Artikel zugeordneten Packstoff abgegeben. Die Greiferbackenpaare 31, 32 sind dabei konfiguriert, um den Artikel über eine parallel zur Drehachse D ausgerichtete Artikelachse klemmend zu halten.

Generell kann jeder Stahl, Edelstahl, Aluminium und andere elektrisch leitfähige Materialien wie Carbon durch Induktion erwärmt werden. Der dabei erreichbare Wirkungsgrad (Verhältnis aus eingebrachter Energie und resultierender Erwärmung) ist aber stark von den magnetischen Eigenschaften des Materials abhängig. Im Wesentlichen gilt: umso besser die magnetische Leitfähigkeit des zu erwärmenden Materials, desto höhere Wirkungsgrade können erreicht werden.

Die Greiferbacken 31, 32 bestehen hier aus einem ferromagnetischen Edelstahl, der aus Sicht der Feldbündelung sehr gute magnetische Eigenschaften hat und neben den Wirbelstromverlusten noch Ummagnetisierungsverluste aufweist, die ebenfalls zur Erwärmung der Greiferbacken 31, 32 beitragen.

Um eine gleichmäßige Erwärmung der Siegeleinheit 3 sicherzustellen, ist jede Leiterschleife 21, 22 symmetrisch zu der Bewegungsbahn B1, B2 der jeweiligen Siegeleinheit 3 ausgerichtet. Zudem sind die unterschiedlichen Artikelbahnen B1, B2 zugeordneten Leiterschleifen 21, 22 symmetrisch zueinander angeordnet und auch symmetrisch zueinander stromdurchflossen.

Die Siegeleinrichtung 1 weist für jede Leiterschleife 21, 22 eine eigene Flussleiteinrichtung 4 mit einer Mehrzahl von Flussleitelementen 41, 42, 43 auf, um die von den Leiterschleifen 21, 22 ausgehenden magnetischen Feldlinien M auf die jeweilige Siegeleinheit 3 bzw. deren Bewegungsbahn B1, B2 zu konzentrieren und symmetrisch zu dieser auszurichten. Dabei bilden die Flussleitelemente 41, 42, 43 der Flussleiteinrichtung 4 für jede Greiferbacke eines Greiferbackenpaars 31, 32 pro Artikelbahn 31, 32 einen eigenen Kanal, in welchem sich einer der Längsleiterabschnitte 21l, 22l erstreckt und durch welchen die Siegeleinheit 3 auf ihrer kreisförmigen Bewegungsbahn B1, B2 geführt wird. Die induktiv zu beheizende Fläche jeder Greiferbacke steht dem jeweiligen Längsleiterabschnitt 21l, 22l in engem Abstand möglichst parallel gegenüber, sodass die Energie gleichmäßig übertragen werden kann.

Der Induktor 2 soll die Greifer 31, 32 zum Siegeln von Produkten/Artikeln erwärmen. Die Besonderheit ist, dass gleichzeitig mehrere Greifer 31, 32 auf mehreren Bahnen B1, B2 gleichmäßig erwärmt werden.

Bei der Ausführung der Siegeleinrichtung 1 als Siegelkopf bewegen sich die Greifer 31, 32 der Siegeleinheiten 3 auf in sich geschlossenen, z.B. kreis- oder schleifenförmigen Bewegungsbahnen. Es liegt aber ebenfalls im Rahmen der Erfindung, dass die Siegeleinheiten 3 auf linearen Bewegungsbahnen an den Leiterschleifen 21, 22 vorbeigeführt werden, um die Siegeleinheiten 3 induktiv zu beheizen.

Für den Betrieb der Siegeleinrichtung 1 ist es im Allgemeinen unerheblich, ob die den unterschiedlichen Artikelbahnen B1, B2 zugeordneten Leiterschleifen 21, 22 parallel oder in Serie verschaltet sind.

Besondere Merkmale verschiedener Bauformen werden in den nachstehenden Ausführungsbeispielen erläutert.

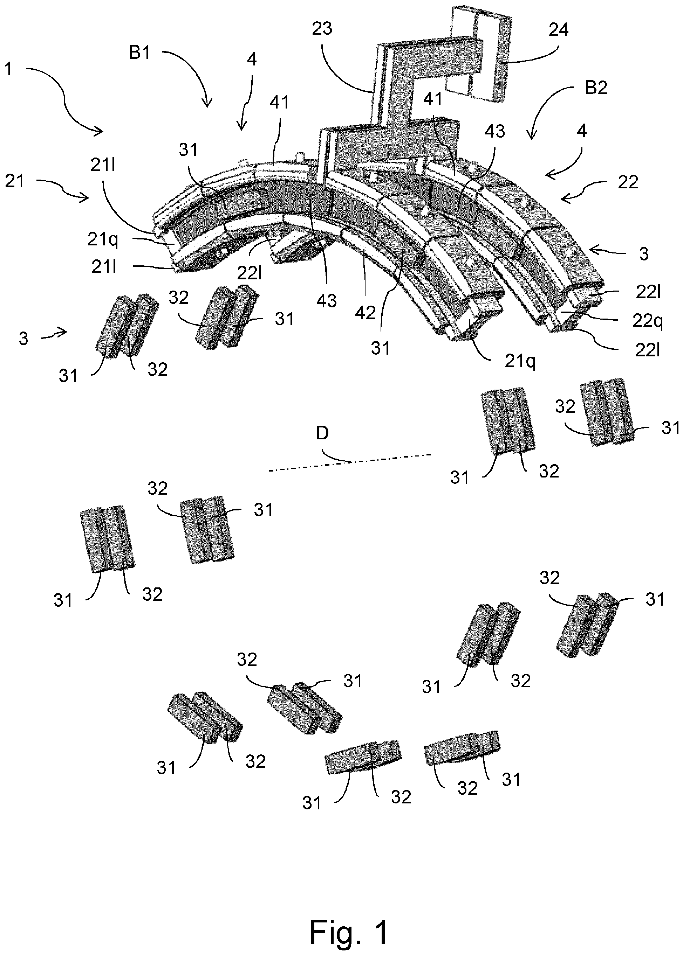

### Erstes Ausführungsbeispiel (Fig. 1 bis 3)

Im ersten Ausführungsbeispiel der Erfindung, dass nachstehend mit Bezug auf Fig. 1 bis 3 erläutert wird, ist der Induktor 2 ist aus zwei parallel verschalteten Leiterschleifen 21, 22 aufgebaut. Diese sind so angeordnet, dass die zu erwärmenden Greifer 31, 32 jeder Siegeleinheit 3 möglichst günstig zum Magnetfeld ausgerichtet sind und damit viel Energie in den Greifern 31, 32 umgesetzt wird. Der Aufbau des Systems ist in Fig. 1 veranschaulicht:
Der in Fig. 1 dargestellte Induktor 2 besteht aus einer Anschlussplatte 24 zum Anbinden an den Generator, einer Gabel 23 zwischen der Anschlussplatte 24 und den beiden Leiterschleifen 21, 22 zum Verteilen des Stromes sowie den beiden Leiterschleifen 21, 22 selbst.

Die Greifer 31, 32 rotieren um die Krümmungsachse des Induktors 2, die gleichzeitig die Drehachse D eines die Siegeleinrichtung 1 bildenden Siegelkopfs darstellt.

Flussleitelemente 41, 42, 43 der Flussleiteinrichtung 4 sind Elemente zur Bündelung des magnetischen Feldes mit einer sehr schlechten elektrischen Leitfähigkeit, damit möglichst keine Wirbelströme induziert werden und somit möglichst wenig Energie in den Flussleitelementen 41, 42, 43 umgesetzt wird. Im konkreten Fall wird ein Sinterwerkstoff aus Eisenpartikeln und Kunststoff, bei dem der Eisenstaub vom Kunststoff ummantelt ist, verwendet.

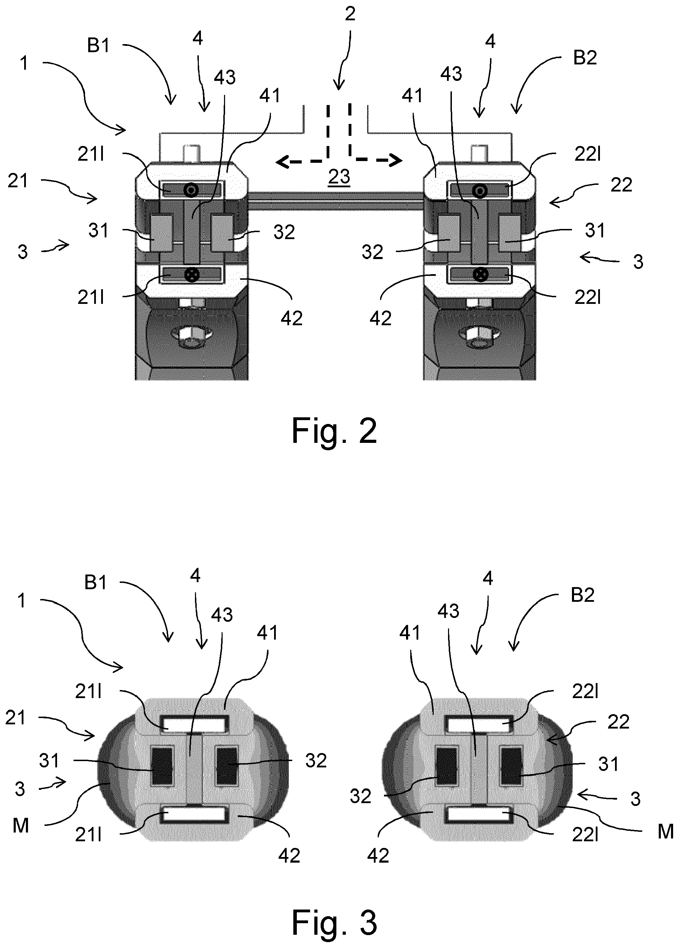

Die Fig. 2 und 3 zeigen Schnittdarstellungen des Induktors 2: Fig. 2 verdeutlicht den Querschnitt des Induktors 2, und die Richtung des elektrischen Stroms in den Leitern der beiden Leiterschleifen 21, 22. Der Strom ist jeweils in den oberen und in den unteren Längsleiterabschnitten 21l, 22l gleichgerichtet. Die Orientierung ist nur beispielhaft eingezeichnet, da es sich um einen Wechselstrom handelt.

Die zwei Leiterschleifen 21, 22 (eine je Artikelbahn B1, B2) entsprechen damit im Wesentlichen jeweils einer Spule mit einer Windung. Mit dem Wissen, dass das Magnetfeld M im inneren einer Spule homogen und am stärksten ausgeprägt ist, ist klar, warum die Greiferbacken 31, 32 ein gutes Erwärmungsverhalten zeigen.

Fig. 3 zeigt die Intensität des veränderlichen Magnetfeldes M, das durch den Induktor 2 generiert wird. Dabei wird deutlich sichtbar, dass es keine signifikante Beeinflussung der Artikelbahnen B1, B2 untereinander gibt. Die Greiferbacken 31, 32 der linken Bahn B1 werden durch die Leiter der rechten Bahn B2 nicht wesentlich beeinflusst, da die Felder M, die durch die Leiter der rechten Bahn B2 erzeugt werden, sich auf der linken Seite weitestgehend gegenseitig aufheben.

An der Oberfläche der Greifer 31, 32 kommt es zur Wirbelstromausbildung und damit zum Wärmeumsatz aufgrund von ohmschen Verlusten. Die Wärme wird im Wesentlichen auf der Greiferoberfläche und in Teilen des Induktors 2 umgesetzt.

Versuche haben gezeigt, dass bei einer Siegeleinrichtung 1 gemäß dem ersten Ausführungsbeispiel ca. 70 bis 80% der aufgebrachten Energie in Form von Wärme in den Greifern 31, 32 ankommen. Das ist aus Sicht der Induktionserwärmung bereits ein sehr guter Wirkungsgrad.

Folgende Varianten und Abwandlungen sind explizit als vom Erfindungsgedanken umfasst anzusehen:
Der Aufbau des Induktors 2 ist immer vom Abstand der Greifer 31, 32 abhängig. Im ersten Ausführungsbeispiel handelt es sich um einen Induktor 2, der für ein kleines Würfelformat geeignet ist. Im Fall von quaderförmigen Produkten gibt es auch weitere Induktorkonfigurationen, die ein symmetrisches Erwärmungsverhalten der Greifer 31, 32 erwarten lassen. Auch die Verwendung jeweils eines eigenständig angesteuerten Induktors 2 für jede Artikelbahn B1, B2 liegt im Rahmen der Erfindung.

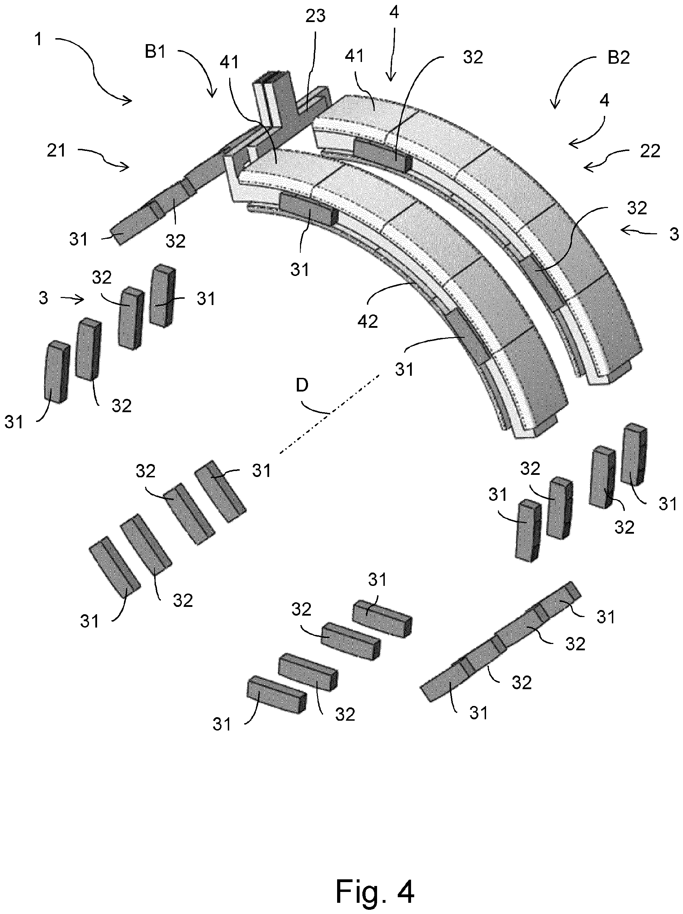

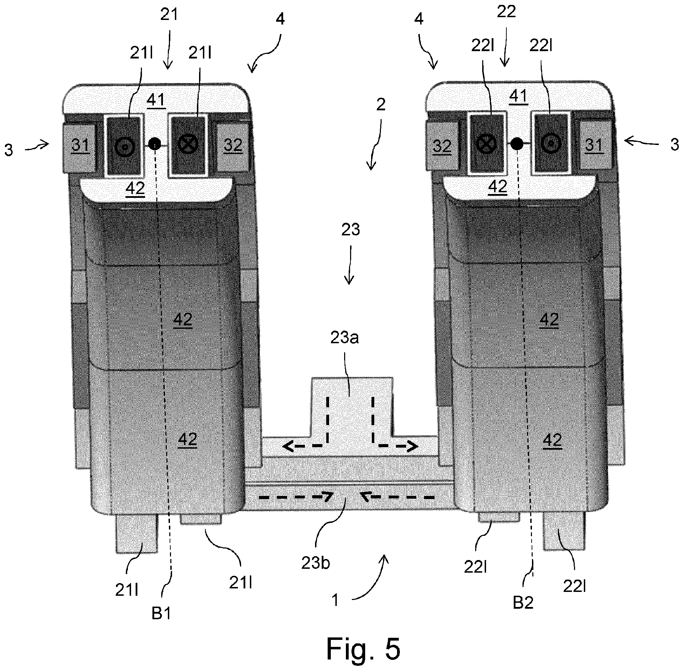

### Zweites Ausführungsbeispiel (Fig. 4 und 5)

Das zweite Ausführungsbeispiel basiert auf dem ersten Ausführungsbeispiel und umfasst im Wesentlichen dieselben Merkmale, die mit identischen Bezugszeichen versehen sind, mit Ausnahme der folgenden Unterschiede:
Abweichend vom ersten Ausführungsbeispiel sind die Leiterschleifen 21, 22 des Induktors 2 im zweiten Ausführungsbeispiel in anderer Anordnung parallel verschaltet. Dabei sind die Längsleiterabschnitte 21l, 22l derselben Leiterschleife 21, 22 in axialer Richtung d.h. parallel zur Drehachse D versetzt und nicht radial zur Drehachse D. Ferner befindet sich die Gabel 23, durch welche beide Leiterschleifen 21, 22 mit Strom versorgt werden, im zweiten Ausführungsbeispiel nicht mittig, sondern jeweils an demselben Ende der Längsleiterabschnitte 21l, 22l, sodass der Strom durch den einen Längsleiterabschnitt 21l, 22l, hin, d.h. weg von der Gabel 23, und durch den anderen wieder zurück, d.h. hin zur Gabel 23, fließt. Die Richtungen der Stromflüsse durch die Leiterschleifen 21, 22 sind durch Pfeile und entsprechende Symbole angezeigt. Wie in Fig. 5 zu erkennen ist, sind nicht nur die Längsleiterabschnitte 21l, 22l symmetrisch zu den Bewegungsbahnen B1, B2 der Siegeleinheiten bzw. Greiferbacken 31, 32 angeordnet, sondern die beiden Leiterschleifen 21, 22 sind insgesamt symmetrisch zu einer senkrecht zur Drehachse D durch die Gabel 23 verlaufende Symmetrieebene angeordnet und stromdurchflossen. Die oberen und unteren, jeweils T-förmigen Flussleitelemente 41, 42 jeder Flussleiteinrichtung 4 sind zu einem näherungsweise (Doppel-T bzw.) H-förmigen Profil zusammengesetzt, um an beiden axialen Seiten jeweils einen offenen Kanal zu bilden, an dessen Boden einer der Längsleiterabschnitte 21l, 22l verläuft und in welchem jeweils eine der Greiferbacken 31, 32 eines Greiferbackenpaars 31, 32 auf ihrer Bewegungsbahn B1, B2 bewegt wird. Dadurch ergibt sich eine besonders gleichmäßige Erwärmung der Greiferbacken 31, 32.

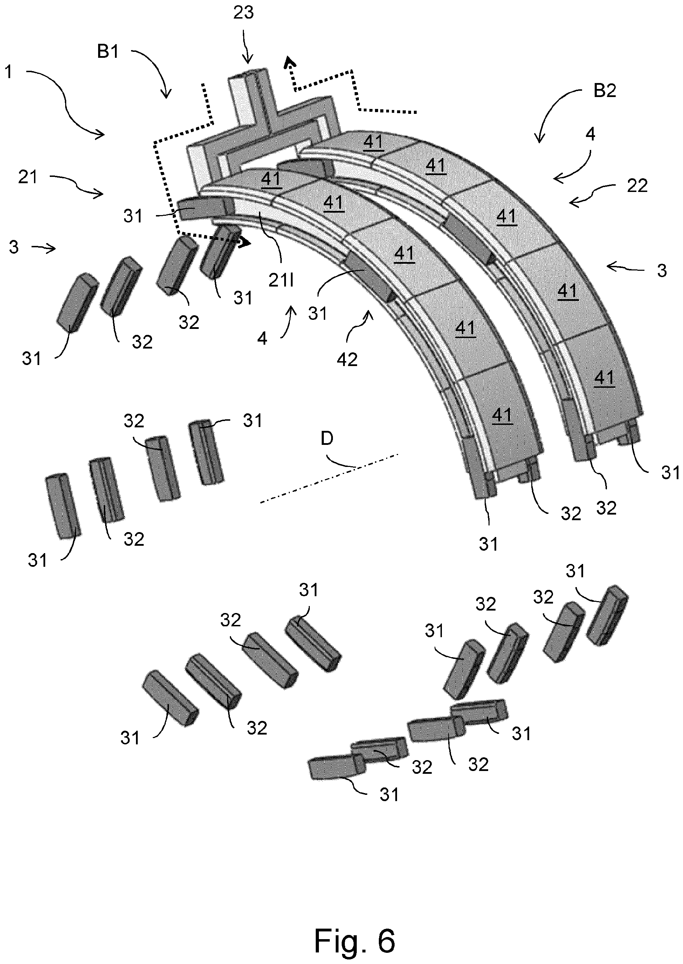

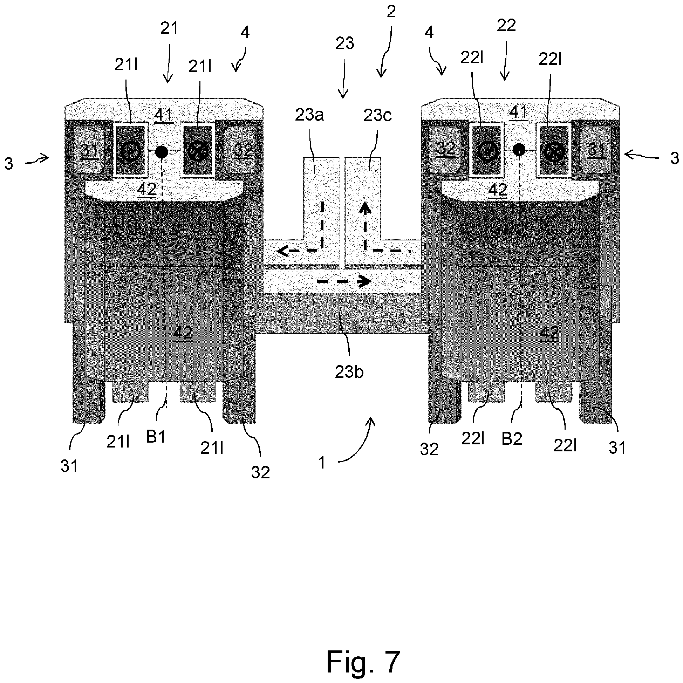

### Drittes Ausführungsbeispiel (Fig. 6 und 7)

Das dritte Ausführungsbeispiel basiert auf dem zweiten Ausführungsbeispiel und umfasst im Wesentlichen dieselben Merkmale, die mit identischen Bezugszeichen versehen sind, mit Ausnahme der folgenden Unterschiede:
Abweichend vom zweiten Ausführungsbeispiel sind die Leiterschleifen 21, 22 des Induktors 2 im dritten Ausführungsbeispiel nicht parallel, sondern in Serie verschaltet. Wie im zweiten Ausführungsbeispiel befindet sich die Gabel 23 jeweils an demselben Ende der Längsleiterabschnitte 21l, 22l. Die Richtungen der Stromflüsse durch die Leiterschleifen 21, 22 sind durch Pfeile und entsprechende Symbole angezeigt.

Zunächst fließt der Strom aus einem ersten Ast 23a der Gabel 23 in die erste Leiterschleife 21 und nach dem Durchlaufen derselben über die Gabelbrücke 23b in die zweite Leiterschleife 22, um anschließend über einen zweiten Ast 23c der Gabel 23 zurück zum Generator zu fließen.

In jeder Leiterschleife 21, 22 fließt der Strom zunächst durch den linken Längsleiterabschnitt 21l, 22l, hin, d.h. weg von der Gabel 23, und - nach Durchlaufen eines Querleiterabschnitts (21q, 22q - hier nicht dargestellt) - durch den rechten Längsleiterabschnitt 21l, 22l wieder zurück, d.h. hin zur Gabel 23.

Die Stromflüsse durch die Leiterschleife 21, 22 sind im dritten Ausführungsbeispiel nicht symmetrisch, obwohl die Leiterschleifen 21, 22 selbst symmetrisch zueinander ausgerichtet sind.

### Vorteile der Erfindung:

Zusammengefasst bietet die erfindungsgemäße Siegeleinrichtung 1 die folgenden Vorteile:
Der Kerngedanken besteht in der gleichzeitigen, gleichmäßigen, symmetrischen, berührungslosen, mehrbahnigen Erwärmung von Greifern 31, 32.

Im Vergleich zu anderen Induktoren 2 ist mit der erfindungsgemäßen Lösung ein hoher Wirkungsgrad erzielbar. Durch die berührungslose Erwärmung der Greifer 31, 32 wird eine hohe Energieeffizienz erreicht, weil die Erwärmung der Greifer 31, 32 direkt in der Oberfläche generiert wird. Die Flussleitelemente 41, 42, 43 bewirken eine gute Feldabschirmung sowie eine geringe Bedienerbelastung durch Magnetfelder. Die Anordnung der Leiterschleifen 21, 22 führt zur gleichmäßigen Erwärmung und Regelbarkeit aller Siegeleinrichtungen. Das für zweibahnige Verpackungsmaschinen beschriebene Konzept ist problemlos auch auf mehrbahnige Verpackungsmaschinen übertragbar.

### Bezugszeichenliste

- 1: Siegeleinrichtung
- 2: Induktor
- 21, 22: Leiterschleife
- 21l, 22l: Längsabschnitt
- 21q, 22q: Querabschnitt
- 23: Gabel
- 23a: Erster Ast der Gabel
- 23b: Gabelbrücke
- 23c: Zweiter Ast der Gabel
- 24: Anschlussplatte
- 3: Siegeleinheit
- 31, 32: Greifer(backen)
- 4: Flussleiteinrichtung
- 41, 42, 43: Flussleitelement(e)
- A: Artikel
- B1, B2: Artikelbahn(en)
- M: Magnetfeld

## Patentansprüche

1. Siegeleinrichtung (1) für eine Verpackungsmaschine zur Verpackung kleinstückiger Artikel auf parallelen Artikelbahnen (B1, B2), umfassend wenigstens einen Induktor (2) und für jede Artikelbahn (B1, B2) wenigstens eine Siegeleinheit (3), die durch den Induktor (2) induktiv beheizbar ist, um einen Packstoff, der einem der auf der Artikelbahn (B1, B2) geförderten Artikel zugeordnet ist, zu siegeln, **dadurch gekennzeichnet, dass** der Induktor (2) für jede Artikelbahn (B1, B2) mindestens eine eigene Leiterschleife (21, 22) aufweist.

2. Siegeleinrichtung (1) nach Anspruch 1, **dadurch gekennzeichnet, dass** die Leiterschleifen (21, 22) parallel oder in Serie verschaltet sind.

3. Siegeleinrichtung (1) nach einem der vorangehenden Ansprüche, **dadurch gekennzeichnet, dass** jede Siegeleinheit (3) zur induktiven Beheizung entlang einer Bewegungsbahn (B1, B2) bewegbar ist und jede Leiterschleife (21, 22) wenigstens zwei Längsleiterabschnitte (21l, 22l) aufweist, die sich parallel zu der Bewegungsbahn (B1, B2) der Siegeleinheit (3) erstrecken, vorzugsweise auf unterschiedlichen Seiten davon, und bevorzugt in entgegengesetzten Richtungen stromdurchflossen sind, und wenigstens einen Querleiterabschnitt (21q, 22q), der sich quer bzw. senkrecht zur Bewegungsbahn (B1, B2) der Siegeleinheit (3) erstreckt, um die zwei Längsleiterabschnitte (211, 22l) zu verbinden.

4. Siegeleinrichtung (1) nach einem der vorangehenden Ansprüche, **dadurch gekennzeichnet, dass** jede Leiterschleife (21, 22) symmetrisch zu der Bewegungsbahn (B1, B2) der jeweiligen Siegeleinheit (3) ausgerichtet ist und/oder die unterschiedlichen Artikelbahnen (B1, B2) zugeordneten Leiterschleifen (21, 22) symmetrisch zueinander angeordnet und ggf. symmetrisch zueinander stromdurchflossen sind.

5. Siegeleinrichtung (1) nach einem der vorangehenden Ansprüche, **dadurch gekennzeichnet, dass** die Siegeleinrichtung (1) für jede Artikelbahn (B1, B2) eine Vielzahl von Siegeleinheiten (3) aufweist.

6. Siegeleinrichtung (1) nach einem der vorangehenden Ansprüche, **dadurch gekennzeichnet, dass** ein die Leiterschleife (21, 22) bildender Leiter als Rohr ausgebildet ist und vorzugsweise mit Kühlmittel durchströmt wird.

7. Siegeleinrichtung (1) nach einem der vorangehenden Ansprüche, **dadurch gekennzeichnet, dass** die Siegeleinheit (3) aus ferromagnetischem Edelstahl ausgebildet ist.

8. Siegeleinrichtung (1) nach einem der vorangehenden Ansprüche, **dadurch gekennzeichnet, dass** die Siegeleinrichtung (1) eine Flussleiteinrichtung (4; 41, 42, 43) aufweist, um die von den Leiterschleifen (21, 22) ausgehenden magnetischen Feldlinien auf die Bewegungsbahn (B1, B2) der jeweiligen Siegeleinheit (3) zu konzentrieren und/oder symmetrisch zu dieser auszurichten, wobei vorzugsweise die Flussleiteinrichtung (4; 41, 42, 43) wenigstens einen Kanal bildet, der zumindest einen Längsleiterabschnitt (21l, 22l) einer der Leiterschleifen (21, 22) umgibt und durch welchen die Siegeleinheit (3) auf einer Bewegungsbahn (B1, B2) geführt wird.

9. Siegeleinrichtung (1) nach einem der vorangehenden Ansprüche, **dadurch gekennzeichnet, dass** jede Siegeleinheit (3) mindestens ein induktiv beheizbares Greiferbackenpaar (31, 32) aufweist, um einen zumindest teilweise mit Packstoff umwickelten Artikel an einer Aufnahmestation aufzunehmen, kontinuierlich entlang der jeweiligen Artikelbahn (B1, B2) zu fördern, und nach Siegelung des dem Artikel zugeordneten Packstoffs an einer Abgabestation abzugeben, wobei die induktive Beheizung des Greiferbackenpaars (31, 32) vorzugsweise zwischen der Abgabestation und der Aufnahmestation in einem Zustand erfolgt, in welchem das Greiferbackenpaar (31, 32) keinen Artikel fördert.

10. Siegeleinrichtung (1) nach Anspruch 8 und 9, **dadurch gekennzeichnet, dass** die Flussleiteinrichtung (4; 41, 42, 43) für jede Greiferbacke zumindest eines Greiferbackenpaars (31, 32) pro Artikelbahn (31, 32) einen eigenen Kanal bildet.

11. Siegeleinrichtung (1) nach einem der vorangehenden Ansprüche, **dadurch gekennzeichnet, dass** die Siegeleinrichtung (1) vorzugsweise als ein um eine Drehachse (D) rotierender Siegelkopf ausgebildet ist.

12. Siegeleinrichtung (1) nach Anspruch 11, **dadurch gekennzeichnet, dass** jede Leiterschleife (21, 22), vorzugsweise jeder Längsleiterabschnitt (211, 22l), um die Drehachse (D) gekrümmt ist.
